# EUROPEAN PATENT SPECIFICATION

(11) **EP 1 772 663 B1**
(45) Date of publication and mention of the grant of the patent: **20.05.2009**
(21) Application number: 06020788.3
(22) Date of filing: 04.10.2006
(51) Int. Cl.: F17C 5/06

(54) **Gas filling system**
Gasabfüllanlage
Instalation de remplissage de gaz

(30) Priority: 10.10.2005 US 247561
(43) Date of publication of application: 11.04.2007
(73) Proprietor: Air Products and Chemicals, Inc., Allentown, PA 18195-1501 (US)
(72) Inventor: Cohen, Joseph Perry, Bethlehem, PA 18017 (US); Farese, David John, Riegelsville, PA 18077 (US)
(74) Representative: Rögner, Jürgen

(56) References cited:
- WO-A-86/06515
- DE-A1- 2 725 410
- DE-A1- 4 016 140
- DE-A1-3102004 003 21
- GB-A- 2 129 170
- US-A1- 4 275 752
- US-A1- 4 487 187

## Description

### BACKGROUND OF THE INVENTION

This invention relates to a system and method for filling a receiving vessel or tank from a source of compressed gas, and more specifically to a system and method for filling a receiving tank or vessel, e.g., a receiving tank in a vehicle, in a manner that aids in preventing excess heating of the tank and also in eliminating excess fill time, particularly when filling large receiving tanks.

In a system for filling a receiving tank or vessel with compressed gas it is necessary to control the flow rate of the gas so that the receiving tank does not overheat. Overheating occurs as a result of both adiabatic compression of the gas, and, when the gas is hydrogen or helium, by the reverse Joule-Thompson effect. The heat of compression is partially offset by the isentropic expansion cooling within the storage vessel. Moreover, for gases other than hydrogen and helium, a conventional Joule-Thompson effect takes place, which can further mitigate against overheating resulting from the impact of adiabatic compression of gas in the receiving tank. However, even when charging a receiving tank or vessel with gases other than hydrogen and helium, the adiabatic compression of gas in the receiving tank does create an overheating concern.

For various fueling operations, such as in the delivery of gaseous hydrogen to a receiving tank in a vehicle, it is necessary to provide some form of flow control in order to avoid excess heating of the receiving tank and also to avoid excess fill time, particularly when filling a large receiving tank, e.g., a receiving tank in a large vehicle.

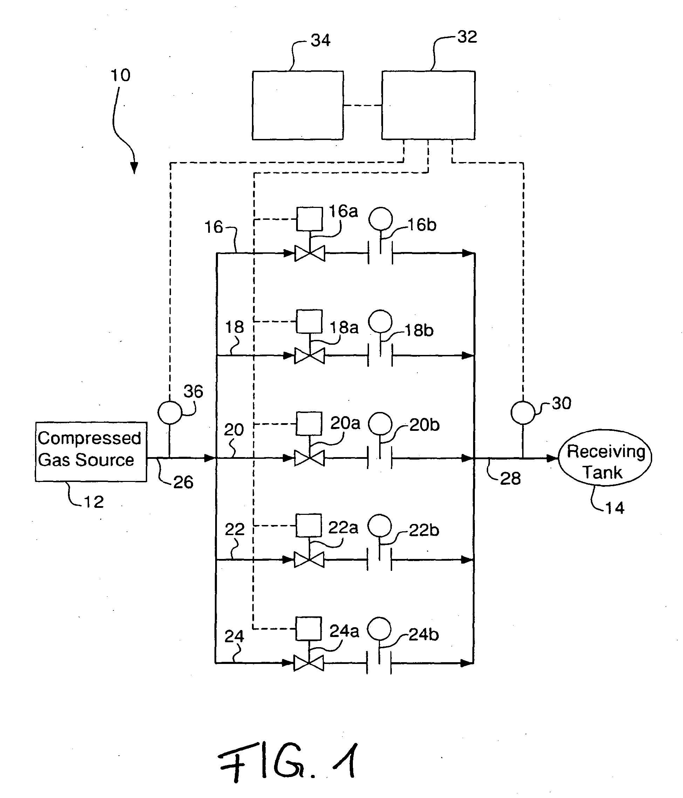

U.S. Patent No. 6,786,245, assigned to Air Products & Chemicals, Inc., the assignee of the present application, discloses a programmable logic controller (PLC) that can receive information on pressure in the receiving tank, e.g., from the supply hose, which indirectly measures or reflects the pressure in the receiving tank, and on ambient temperature, and regulates the set point of the programmable pressure regulator using an I/P controller based upon these latter two parameters. The system can be seen best in Fig. 5 of the '245 patent. This latter system is believed to lack desired reliability, due to the potential for malfunctions associated with the control valve, the PLC, and/or the I/P controller.

Mické et al., U.S. Patent No. 5,826,632 discloses different options for controlling the flow of gas during a filling process, including the use of variable orifices, control valves and a fixed orifice in combination with a valve.

Kitayama et al., U.S. Patent No. 6,210,482 discloses a system for feeding gases for use in a semiconductor system in which multiple orifices of the same or different size are employed to supply one or more of the gases.

Togasawa et al., U.S. Patent No. 6,598,624 describes the effect of orifice diameter and upstream pressure on the fill rate to a hydrogen tank.

Petro, U.S. Patent No. 4,487,187 discloses a system of parallel lines with solenoid valves and orifices supplying a compressible fluid such as methane or propane to an internal combustion engine; the orifice sizes being proportional to successive powers of 2.

Although the prior art does disclose various techniques for attempting to control flow rate of gases, none of the systems have recognized the benefit of controlling, or the desire to control the ramp rate of the gas to limit the temperature rise in a receiving tank, or vessel, and also, to avoid prolonged fill times, particularly when filling large tanks or vessels. It is to this latter-type of system that the present invention is directed.

WO 86/06515 describes a device comprising a pipe connected to the gas source, a pipe connected to the consumer apparatus to be supplied, and optionally a container connected to the pipe. Between the pipe of which the pressure is lower and/or the container, there are provided n pipes with a passage capacity which may be varied according to a predetermined functional relationship, which latter pipes are provided with shutters controllable according to a predetermined program.

### BRIEF SUMMARY OF THE INVENTION

In accordance with both the system and process of this invention the flow rate of compressed gas from a source to a receiving vessel or tank is controlled to achieve a desired ramp rate. "Ramp rate" is a change in pressure with time, e.g., either an increase or decrease in pressure with time.

In a gas filling system in accordance with this invention a receiving conduit communicates a source of compressed gas with a plurality of gas transmission lines that are in parallel with each other. A delivery conduit communicates with a vessel intended to receive compressed gas and also with the plurality of gas transmission lines. A control valve in each of a plurality of the gas transmission lines upstream of the delivery conduit communicates those gas transmission lines with the delivery conduit when in an opened condition. At least some, and preferably all of the gas transmission lines have differing orifice coefficients for transmitting gas at different flow rates therethrough.

A flow controller has a desired ramp rate communicating with it, and the flow controller operates to open and close selected control valves to thereby control the flow rate of gas to the receiving vessel. A pressure monitor downstream of the control valves measures the pressure of gas being directed into the receiving vessel in selected time intervals, to essentially monitor the actual ramp rate of the gas flowing into the receiving vessel. The pressure of gas measured by the pressure monitor is directed continuously to the flow controller, and the flow controller compares the desired ramp rate that communicates with it with the pressure of gas being monitored downstream of the control valves and controls the flow rate of gas through the transmission lines to the receiving vessel based upon that comparison.

In the preferred embodiments of this invention the flow controller increases the flow rate of gas when the actual ramp rate is lower than the desired ramp rate and decreases the flow rate of gas when the actual ramp rate is higher than the desired ramp rate.

Reference throughout this application to the desired ramp rate "communicating" with the flow controller includes programming the desired ramp rate directly into the flow controller (e.g., when the flow controller is a programmable logic controller or similar device), or feeding the desired ramp rate into the controller through another source, such as a remote computer system or other customer interface.

I n the preferred embodiment of this invention the pressure monitor downstream of the control valves monitors the pressure of gas in the delivery conduit, which directly communicates with the receiving vessel or tank.

In the most preferred embodiments of this invention each gas transmission line has an orifice coefficient different from the orifice coefficient in every other transmission line. Most preferably each orifice coefficient differs from the next smallest orifice coefficient by a factor of substantially 2, to thereby permit a wide degree of control over the flow rate of gas through the gas filling system.

In a preferred system of this invention the mass flow of gas into the receiving vessel is determined to thereby determine the volume of gas employed to fill the vessel. This is particularly desirable when the receiving vessel is a gas tank in a vehicle, and actually is necessary in order to determine the volume of gas employed to fill the vessel, to thereby establish the selling price for the gas.

Specifically, in the preferred embodiment of this invention a second pressure monitor is employed upstream of the transmission lines for measuring the gas pressure upstream of the transmission lines and transmitting that gas pressure to the flow controller. The flow controller includes data regarding the size of orifices in the transmission lines that actually are communicating with the delivery conduit through opened control valves, and the flow controller functions to determine the mass flow of gas into the receiving vessel based upon the input from the second pressure monitor and the data representing the size of orifices in transmission lines is communicating with the delivery conduit through opened control valves.

In another embodiment of this invention for determining the mass flow of gas into the receiving vessel, the second pressure monitor upstream of the transmission lines is employed, in the same manner as in the above-described embodiment. However, in this embodiment the flow controller determines the ratio of the pressure measured downstream of the transmission lines, preferably by a pressure monitor in the delivery conduit, to the pressure measured upstream of the transmission lines by the second pressure monitor and then determines the mass flow of gas into the receiving vessel based upon that ratio.

In accordance with the broadest method of this invention a receiving vessel is filled from a source of compressed gas by the steps of measuring pressure of gas being directed into the receiving vessel in successive selected time intervals to determine the actual ramp rate of gas being directed into the receiving vessel, comparing the actual ramp rate with a desired ramp rate and controlling gas flow rate in response to that comparison.

Most preferably, the gas flow rate is increased when the actual ramp rate is determined to be lower than the desired ramp rate, and the gas flow rate is decreased when the actual ramp rate is determined to be higher than the desired ramp rate. Thus, in the preferred embodiment of this invention the gas flow rates are established and/or varied during the filling cycle to achieve, or approach, the desired ramp rate.

In a preferred method of filling a receiving vessel from a source of compressed gas in accordance with this invention, a gas filling system as described earlier herein is employed, and the method includes the steps of measuring the pressure of gas being directed into the receiving vessel in successive selected time intervals to determine the actual ramp rate of gas being directed into the receiving vessel; comparing the actual ramp rate with the desired ramp rate and controlling gas flow through the plurality of transmission lines in response to that comparison.

In accordance with a preferred method of this invention the mass flow of gas into the receiving vessel is determined by monitoring the pressure of gas upstream of the control valves employed in the transmission lines, determining the size of orifices in the transmission lines communicating with the receiving conduit through opened control valves and calculating the mass flow of gas into the receiving vessel based upon these latter two parameters.

In an alternate method for determining the mass flow of gas into the receiving vessel the pressure of gas upstream of the control valves is monitored, the ratio of the pressure of gas being directed into the receiving vessel to the pressure of gas upstream of the control valves it is determined, and based upon that ratio the mass flow of gas into the receiving vessel is calculated.

### BRIEF DESCRIPTION OF THE DRAWINGS

The invention will be described by way of example with reference to the accompanying Figure which is a schematic view showing a representative gas filling system in accordance with this invention.

### DETAILED DESCRIPTION OF THE INVENTION

Referring to the Figure, a gas filling system for supplying a gas from a supply of compressed gas 12 to a receiving tank or vessel 14 is schematically illustrated at 10. The gas filling system 10 can be employed to fill a receiving vessel or tank 14 with a variety of different gases, e.g., hydrogen, helium, or natural gas. A particularly desirable use of the filling system 10 is for filling a receiving tank or vessel 14 with hydrogen, and in particular, to a system for filling a receiving tank or vessel of a vehicle with hydrogen.

Still referring to the Figure, the gas filling system 10 includes a supply of gas, e.g., hydrogen, from a pressurized source 12. A variety of pressurized sources can be employed, such as a single storage tank, a number of storage tanks, a pipe line supply, or a supply from a compressor. The gas is directed from the pressurized source 12 to a receiving tank 14 through a plurality of gas transmission lines in parallel with each other. In the illustrated system five transmission lines are shown at 16, 18, 20, 22 and 24. However, in accordance with the broadest aspects of this invention the number of transmission lines can be varied within wide limits, and the number of such transmission lines does not constitute a limitation on the broadest aspects of this invention.

The source 12 of compressed gas communicates with the plurality of transmission lines 16, 18, 20, 22 and 24 through a receiving conduit 26. The downstream ends of each of the transmission lines communicate with the receiving tank or vessel 14 through a delivery conduit 28.

Control valves, which preferably are solenoid valves 16a, 18a, 20a, 22a and 24a, are located in the transmission lines 16, 18, 20, 22 and 24, respectively.

Still referring to the Figure, orifice plates, schematically illustrated at 16b, 18b, 20b, 22b and 24b are provided in each of the transmission lines 16, 18, 20, 22 and 24, respectively, and these orifice plates include passages of different dimensions, whereby the orifice coefficient (Cv) of each of the transmission lines is different from the orifice coefficient in every other line.

In a preferred embodiment of this invention the orifice coefficients Cv of the passages in the orifice plates successively increase by a factor of 2. In particular, assuming that orifice plate 16a has a relative orifice coefficient of 1, then orifice plate 18b has an orifice coefficient of substantially 2; orifice plate 20b has an orifice coefficient of substantially 4; orifice plate 22b has an orifice coefficient of substantially 8 and orifice plate 24b has an orifice coefficient of substantially 16.

As illustrated, the system 10 includes a pressure monitor 30, preferably monitoring pressure in the delivery conduit 28 at predetermined, selected time intervals, and continuously feeds the pressure measurements (which increase over time) to controller 32, which preferably is a programmable logic controller (PLC). The programmable logic controller 32 preferably includes a desired ramp rate programmed into it. However, it is within the scope of this invention to actually feed or direct a signal into the programmable logic controller 32 from a separate source or interface, such as a suitable customer computer interface schematically illustrated at 34. Based upon the required or desired ramp rate, either as programmed into the PLC 32 or inputted into the PLC from a separate source or interface 34, the PLC functions to open one or more of the control valves 16a, 18a, 20a, 22a and 24a to establish the desired flow of gas.

For example, the PLC may open valve 20a to establish a flow rate through orifice plate 20b for a predetermined period of time, e.g., 5 seconds, while measuring the pressure rise during that period of time. That specific rise in pressure provides an estimate of the size of the receiving tank, which, in turn, provides a baseline for selecting the valves to be opened initially to establish the desired, proper ramp rate.

As the gas is flowing through the delivery conduit 28 into the receiving tank 14, the pressure within the tank will continuously increase. The pressure increase over preselected periods of time is monitored by pressure monitor 30, which feeds a signal indicative of the pressure increase to the PLC 32. The pressure increase that continuously is directed to the PLC during the preselected period of time represents the actual ramp rate of the gas flow into the receiving tank 14. This ramp rate is compared to the desired ramp rate that either is programmed into the PLC 32 or directed to the PLC through a separate interface 34, to determine whether the actual ramp rate is either lower or higher than the desired ramp rate.

If the actual ramp rate is lower than the desired ramp rate the PLC will operate selected control valves 16a through 24a to increase the flow rate through the transmission lines 16, 18, 20, 22 and 24, and thereby increase the actual ramp rate.

If the actual ramp rate is determined to be higher than the desired ramp rate then the PLC 32 will function to control the valves 16a through 24a in a manner to reduce the flow rate of gas through the transmission lines 16 through 24, and thereby lower the actual ramp rate of gas into the receiving tank 14.

In order to prevent a rapid change in flow rate, thereby creating an undesired pressure pulse of gas to the receiving tank 14, the various solenoid valves 16a through 24a can be sequenced in a manner to minimize the change in total orifice coefficient. For example, if solenoid valve 20a is opened and the flow rate needs to be increased to maintain the proper ramp rate, valve 16a would be opened to increase the total orifice coefficient from 4 to 5, i.e., a change of only one unit. If additional flow is required, valve 16a would be closed and valve 18a would be opened so that the total orifice coefficient is increased to 6, i.e., an additional increase of only one unit. Thus, by providing different orifice coefficients in the various transmission lines, such that each orifice coefficient differs from the next smallest orifice coefficient by a factor of substantially two, the system can be controlled in a manner to gradually increase (or decrease) the total orifice coefficient communicating with the receiving tank 14 in single units.

From the above explanation it should be apparent that the gas filling system 10 in accordance with this invention functions to selectively control flow rates through one or more of the transmission lines 16 through 24 during the filling cycle to achieve, or approach, a desired ramp rate. As stated earlier, this desired ramp rate either is programmed into the PLC 32 or is directed to the PLC from a separate interface 34.

Still referring to the Figure, the gas filling system 10 also is designed to determine the mass flow of gas into the receiving tank 14. In this manner, the quantity of gas directed into the receiving tank can be monitored, e.g., in order to determine the proper amount to be charged for the gas.

In order to measure the mass flow of gas into the receiving tank the gas filling system 10 is provided with a second pressure monitor 36 located upstream of the transmission lines 16 through 24. More preferably, the second pressure monitor 36 is connected to the receiving conduit 26 to monitor the pressure within that line. The absolute pressure level in line 26 is dependent upon the number of valves 16a through 24a that are opened, to thereby communicate the compressed gas with orifices having varying orifice coefficients.

By including a second pressure monitor 36 in the receiving conduit 26 the mass flow of gas into the receiving vessel can be determined, preferably by one of two methods. In both methods the pressure measured by the monitor 36 is directed into the PLC 32 and is employed in the determination of the mass flow of the gas.

In one of the two methods for determine the mass flow of gas into the receiving vessel, the PLC 32 includes data representative of the size of the orifices in the transmission lines that are in communication with the delivery conduit 28 through opened control valves, and the PLC 32 processes both data representing the gas pressure measured by the monitor 36 and data representative of the size of orifices in the transmission lines 16-24 communicating with the delivery conduit 28 through opened control valves for determine, or calculating, the mass flow of gas into the receiving vessel 14. This gas flow can be displayed visually on a read out screen or panel, or in other ways known to individuals skilled in the art.

It should be noted that people skilled in the art fully understand how the PLC 32 is capable of processing pressure data determined by pressure monitor 36 and data representative of the size of the orifices in the transmission lines communicating with the delivery conduit through the open control valves to thereby calculate the mass flow of gas into the receiving vessel. Therefore, no further explanation is believed to be necessary.

In accordance with a second method for determining the mass flow of gas into the receiving vessel the flow controller 32 determines the ratio of the pressure measured downstream of the transmission lines by the pressure monitor 30 to the pressure measured upstream of the transmission lines by the pressure monitor 36, and based upon that ratio, employs the appropriate formula for determining the mass flow of gas into the receiving vessel.

In particular, when the ratio of the downstream pressure measured by the monitor 30 to the upstream measured by monitor 36 is less than 0.5, choked flow exists. That is, the gas flowing through the system is flowing at the speed of sound through the various orifices, and based upon this condition; the mass of material flowing through the system can be calculated using the appropriate equation employed for choked flow. It should be understood that measuring the choked flow has no effect on the flow rates of the gas, but rather is used to measure the mass of material flowing through the system. It also should be understood that people skilled in the art clearly know and can select the appropriate equation to use when choked flow exists.

If the ratio of the pressure measured by the pressure monitor 30 to the pressure measured by the pressure monitor 36 is greater than 0.5 then choked flow does not exist, and a different equation is utilized by the PLC 32 to determine the mass flow of gas through the system 10. As in the previous systems, the determined gas flow can be displayed on a visually observable monitor, or can be displayed in other ways known in the art. It also should be understood that people skilled in the art clearly know and can select the appropriate equation to use when choked flow does not exist.

The gas filling system 10 of this invention is extremely effective in avoiding excess heating of a receiving tank receiving a charge of compressed gas, in particular, either hydrogen or helium. Both of these latter gases tend to heat up as a result of adiabatic compression of the gas and the reverse Joule-Thompson effect. This problem of overheating exists even though the heat of compression is partially offset by isentropic expansion cooling within the storage vessel 12.

An additional benefit achieved by the present invention is that the filling time for both small and large receiving tanks can be maintained the same, by simply employing the same ramp rate in both filling operations. This is not the case when other methods are employed to control the fill rate, such as controlling the flow rate of gas based on the absolute pressure increase in the receiving vessel, as is disclosed in the Togasawa et al '624 patent, which was identified earlier in this application.

Although illustrated and described herein with reference to certain specific embodiments, the present invention is nevertheless not intended to be limited to the details shown. Rather, various modifications may be made in the details within the scope and range of equivalents of the claims and without departing from the spirit of the invention.

## Claims

1. A gas filling system (10) for supplying a gas to a receiving vessel (14), said gas filling system comprising:
a. a source of compressed gas (12);
b. a receiving conduit (26) communicating the source of compressed gas (12) with a plurality of gas transmission lines (16, 18, 20, 22, 24) in parallel with each other;
c. a delivery conduit (28) communicating with the receiving vessel (14) and with said plurality of gas transmission lines (16, 18, 20, 22, 24);
d. a control valve (16a, 18a, 20a, 22a, 24a) in each of the plurality of gas transmission lines (16, 18, 20, 22, 24) upstream of said delivery conduit (28) for communicating each of said plurality of gas transmission lines with said delivery conduit when in an opened condition; at least some of said plurality of gas transmission lines having differing orifice coefficients for transmitting gas at different flow rates therethrough;
e. a flow controller (32) for opening and closing selected control valves (16a, 18a, 20a, 22a, 24a) to control the flow rate of gas to said receiving vessel (14) and having a desired ramp rate communicating therewith;
f. a pressure monitor (30) downstream of the control valve for measuring a pressure of gas being directed into the receiving vessel (14) in selected time intervals to determine an actual ramp rate of gas being directed into the receiving vessel (14) and continuously transmitting said pressure of gas to said flow controller (32), said flow controller comparing the desired ramp rate communicating therewith with the actual ramp rate and controlling the flow rate of gas through the plurality of gas transmission lines to said receiving vessel (14) to achieve the desired ramp rate.

2. The gas filling system of claim 1, wherein said flow controller (32) is a programmable logic controller (32) having the desired ramp rate programmed therein.

3. The gas filling system of claim 1, wherein the desired ramp rate is transmitted to the flow controller (32) from another source.

4. The gas filling system of claim 1, wherein said pressure monitor (30) measures the pressure of gas in said delivery conduit (28) in selected time intervals.

5. The gas filling system of claim 1, wherein each of said plurality of gas transmission lines (16, 18, 20, 22, 24) has an orifice coefficient different from the orifice coefficient in every other gas transmission line.

6. The gas filling system of claim 5, wherein the orifice coefficient in each of the plurality of gas transmission lines (16, 18, 20, 22, 24) successively increases by a factor of substantially 2.

7. The gas filling system of claim 1, wherein said pressure monitor (30) measures an increase in pressure in successive selected time intervals, which constitutes the actual ramp rate of gas being directed into said receiving vessel (14), said flow controller (32) comparing the actual ramp rate with the desired ramp rate and controlling the flow rate of gas through the plurality of gas transmission lines (16, 18, 20, 22, 24) to said receiving vessel (14)based upon the difference between the actual ramp rate and the desired ramp rate.

8. The gas filling system of claim 7, wherein said flow controller (32) increases the flow rate of gas through the plurality of gas transmission lines (16, 18, 20, 22, 24) to said receiving vessel (14) when the actual ramp rate is lower than the desired ramp rate and decreases the flow rate of gas through the plurality of gas transmission lines to said receiving vessel when the actual ramp rate is higher than the desired ramp rate.

9. The gas filling system of claim 1, comprising a second pressure monitor upstream (36) of said plurality of gas transmission lines (16, 18, 20, 22, 24) for measuring the pressure of gas upstream of said plurality of gas transmission lines and transmitting data representative of said pressure of gas upstream of said plurality of gas transmission lines to said flow controller (36); said flow controller comprising data representative of a size of orifices (16b, 18b, 20b, 22b, 24b) in the plurality of gas transmission lines (16, 18, 20, 22, 24) communicating with said delivery conduit (28) through opened control valves (16a, 18a, 20a, 22a, 24a), said flow controller (36) comprising means for processing data representing said pressure of gas upstream of said plurality of gas transmission lines and data representative of the size of orifices in the plurality of gas transmission lines communicating with said delivery conduit (28) through opened control valves (16a, 18a, 20a, 22a, 24a) for determining a mass flow of gas into said receiving vessel (14).

10. The gas filling system of claim 1, a comprising the second pressure monitor (36) upstream of said plurality of gas transmission (16, 18, 20, 22, 24) lines for measuring the pressure of gas upstream of said plurality of gas transmission lines and transmitting data representative of said pressure of gas upstream of said plurality of gas transmission lines to said flow controller (36); said flow controller determining a ratio of the pressure of gas measured downstream of said plurality of gas transmission (16, 18, 20, 22, 24) lines to the pressure of gas measured upstream of said plurality of gas transmission lines and determining the mass flow of gas into said receiving vessel (14) based upon said ratio.

11. A method of filling a receiving vessel (14) from a source (12) of compressed gas employing a system (10) comprising a receiving conduit (26) communicating with said source (12) of compressed gas and with a plurality of gas transmission lines (16, 18, 20, 22, 24) in parallel with each other; a delivery conduit (28) downstream of said plurality of transmission lines communicating with said receiving vessel (14), a control valve (16a, 18a, 20a, 22a, 24a) in each of the plurality of gas transmission lines upstream of said delivery conduit (28) for communicating each of said plurality of gas transmission lines with said delivery conduit when in an opened condition; at least some of said plurality of gas transmission lines (16, 18, 20, 22, 24) having differing orifice coefficients for transmitting gas at different flow rates therethrough and a flow controller (32) for opening and closing selected control valves (16a, 18a, 20a, 22a, 24a) to control the flow rate of gas to said receiving vessel (14), said flow controller (32) having a desired ramp rate communicating therewith, said method including steps of measuring a pressure of gas being directed into the receiving vessel (14) in successive selected time intervals to determine an actual ramp rate of gas being directed into the receiving vessel (14); comparing the actual ramp rate with the desired ramp rate and controlling the flow rate of gas through said plurality of gas transmission lines (16, 18, 20, 22, 24) in response to said comparison.

12. The method of claim 11, comprising a step of monitoring the pressure of gas upstream of said control valves (16a, 18a, 20a, 22a, 24a), determining the size of orifices (16b, 18b, 20b, 22b, 24b) in the plurality of gas transmission lines communicating with said receiving conduit (26) through opened control valves (16a, 18a, 20a, 22a, 24a) and calculating a mass flow of gas into said receiving vessel (14) based upon said pressure of gas upstream of said control valves and the size of orifices in the plurality of gas transmission lines (16, 18, 20, 22, 24) communicating with said receiving conduit (26) through opened control valves (16a, 18a, 20a, 22a, 24a).

13. The method of claim 11, comprising the step of monitoring the pressure of gas upstream of said control valves (16a, 18a, 20a, 22a, 24a), determining a ratio of the pressure of gas being directed into the receiving vessel (14) to the pressure of gas upstream of said control valves and based upon said ratio calculating the mass flow of gas into said receiving vessel (14).

14. A method of claim 11 comprising steps of measuring pressure of gas being directed into the receiving vessel (14) in successive selected time intervals to determine an actual ramp rate of gas being directed into the receiving vessel (14); comparing the actual ramp rate with a desired ramp rate and controlling a flow rate of gas being directed into said receiving vessel (14) in response to said comparison.

15. The method of claim 14, wherein the step of controlling the flow rate of gas is carried out by increasing the flow rate of gas when the actual ramp rate is lower than the desired ramp rate and by decreasing the flow rate of gas when the actual ramp rate is higher than the desired ramp rate.

16. The method of claim 14, comprising steps of measuring a pressure of gas between said source (12) of compressed gas and a plurality of gas transmission lines (16, 18, 20, 22, 24) in parallel with each other and comprising control valves (16a, 18a, 20a, 22a, 24a) therein, said control valves being operable between opened and closed conditions, the plurality of gas transmission lines with opened valves therein communicating said source of compressed gas with a delivery conduit (28) communicating with said receiving vessel (14) downstream of said plurality of gas transmission lines (16, 18, 20, 22, 24), determining the size of orifices (16b, 18b, 20b, 22b, 24b) in the plurality of gas transmission lines communicating with said delivery conduit (28) through opened control valves and calculating a mass flow of gas into said receiving vessel (14)based upon said pressure of gas upstream of said control valves and the size of orifices in the plurality of gas transmission lines communicating with said delivery conduit through opened control valves (16a, 18a, 20a, 22a, 24a).

17. The method of claim 14, comprising the steps of measuring the pressure of gas between said source (12) of compressed gas and the plurality of gas transmission lines (16, 18, 20, 22, 24) in parallel with each other and comprising control valves (16a, 18a, 20a, 22a, 24a) therein, said control valves being operable between opened and closed conditions, the plurality of gas transmission lines (16, 18, 20, 22, 24) with opened valves therein communicating said source of compressed gas with the delivery conduit (28)communicating with said receiving vessel (14) downstream of said plurality of gas transmission lines (16, 18, 20, 22, 24), determining a ratio of the pressure of gas being directed into the receiving vessel (14) to the pressure of gas between said source (12) of compressed gas and said plurality of gas transmission lines (16, 18, 20, 22, 24) and based upon said ratio calculating the mass flow of gas into said receiving vessel (14).

## Patentansprüche

1. Gasabfüllsystem (10) zum Zuführen eines Gases in einen Aufnahmebehälter (14), wobei das Gasabfüllsystem umfasst:
a. eine Quelle von komprimiertem Gas (12);
b. ein Aufnahmerohr (26), welches die Quelle von komprimiertem Gas (12) mit einer Vielzahl von Gasübertragungsleitungen (16, 18, 20, 22, 24) parallel miteinander in Kommunikation bringt;
c. ein Bereitstellungsrohr (28), welches mit dem Aufnahmebehälter (14) und mit der Vielzahl von Gasübertragungsleitungen (16, 18, 20, 22, 24) in Kommunikation steht;
d. ein Steuerventil (16a, 18a, 20a, 22a, 24a) in jeder der Vielzahl von Gasübertragungsleitungen (16, 18, 20, 22, 24) stromaufwärts des Bereitstellungsrohrs (28) zum In-Kommunikation-Bringen von jeder der Vielzahl von Gasübertragungsleitungen mit dem Bereitstellungsrohr, wenn in einem geöffneten Zustand; wobei mindestens einige der Vielzahl von Gasübertragungsleitungen unterschiedliche Öffnungskoeffizienten zum Durchlassen von Gas bei unterschiedlichen Durchflussraten durch sie hindurch aufweisen;
e. eine Durchflusssteuervorrichtung (32) zum Öffnen und Schließen von ausgewählten Steuerventilen (16a, 18a, 20a, 22a, 24a) zum Steuern der Durchflussrate von Gas zu dem Aufnahmebehälter (14) und mit einer gewünschten Anstiegs- bzw. Abfallrate in Kommunikation damit;
f. eine Drucküberwachungsvorrichtung (30) nach dem Steuerventil zum Messen eines Drucks von Gas, welches in den Aufnahmebehälter (14) gelenkt wird, in ausgewählten Zeitintervallen, um eine tatsächliche Anstiegs- bzw. Abfallrate von Gas, welches in den Aufnahmebehälter (14) gelenkt wird, zu bestimmen, und zum kontinuierlichen Durchlassen des Drucks von Gas zu der Durchflusssteuervorrichtung (32), wobei die Durchflusssteuervorrichtung die gewünschte Anstiegs- bzw. Abfallrate in Kommunikation damit mit der tatsächlichen Anstiegs- bzw. Abfallrate vergleicht und die Durchflussrate von Gas durch die Vielzahl von Gasübertragungsleitungen zu dem Aufnahmebehälter (14) steuert, wobei die gewünschte Anstiegs- bzw. Abfallrate erhalten wird.

2. Gasabfüllsystem nach Anspruch 1, wobei die Durchflusssteuervorrichtung (32) eine speicherprogrammierbare Steuerung (32), welche die gewünschte Anstiegs- bzw. Abfallrate programmiert darin aufweist, ist.

3. Gasabfüllsystem nach Anspruch 1, wobei die gewünschte Anstiegs- bzw. Abfallrate zu der Durchflusssteuervorrichtung (32) aus einer anderen Quelle durchgelassen wird.

4. Gasabfüllsystem nach Anspruch 1, wobei die Drucküberwachungsvorrichtung (30) den Druck von Gas in dem Bereitstellungsrohr (28) in ausgewählten Zeitintervallen misst.

5. Gasabfüllsystem nach Anspruch 1, wobei jede der Vielzahl von Gasübertragungsleitungen (16, 18, 20, 22, 24) einen Öffnungskoeffizienten unterschiedlich von dem Öffnungskoeffizienten in jeder anderen Gasübertragungsleitung aufweist.

6. Gasabfüllsystem nach Anspruch 5, wobei der Öffnungskoeffizient in jeder der Vielzahl von Gasübertragungsleitungen (16, 18, 20, 22, 24) aufeinanderfolgend um einen Faktor von im Wesentlichen 2 ansteigt.

7. Gasabfüllsystem nach Anspruch 1, wobei die Drucküberwachungsvorrichtung (30) einen Anstieg beim Druck in aufeinanderfolgenden ausgewählten Zeitintervallen misst, welcher die tatsächliche Anstiegs- bzw. Abfallrate von Gas, welches in den Aufnahmebehälter (14) gelenkt wird, darstellt, wobei die Durchflusssteuervorrichtung (32) die tatsächliche Anstiegs- bzw. Abfallrate mit der gewünschten Anstiegs- bzw. Abfallrate vergleicht und die Durchflussrate von Gas durch die Vielzahl von Gasübertragungsleitungen (16, 18, 20, 22, 24) zu dem Aufnahmebehälter (14) bezogen auf den Unterschied zwischen der tatsächliche Anstiegs- bzw. Abfallrate und der gewünschten Anstiegs- bzw. Abfallrate steuert.

8. Gasabfüllsystem nach Anspruch 7, wobei die Durchflusssteuervorrichtung (32) die Durchflussrate von Gas durch die Vielzahl von Gasübertragungsleitungen (16, 18, 20, 22, 24) zum Aufnahmebehälter (14) erhöht, wenn die tatsächliche Anstiegs- bzw. Abfallrate niedriger als die gewünschte Anstiegs- bzw. Abfallrate ist, und die Durchflussrate von Gas durch die Vielzahl von Gasübertragungsleitungen zu dem Aufnahmebehälter erniedrigt, wenn die tatsächliche Anstiegs- bzw. Abfallrate höher als die gewünschte Anstiegs- bzw. Abfallrate ist.

9. Gasabfüllsystem nach Anspruch 1, umfassend eine zweite Drucküberwachungsvorrichtung stromaufwärts (36) der Vielzahl von Gasübertragungsleitungen (16, 18, 20, 22, 24) zum Messen des Drucks von Gas stromaufwärts der Vielzahl von Gasübertragungsleitungen und zum Durchleiten von Daten, welche für den Druck von Gas stromaufwärts der Vielzahl von Gasübertragungsleitungen repräsentativ sind, zu der Durchflusssteuervorrichtung (36); wobei die Durchflusssteuervorrichtung Daten, welche für eine Größe von Öffnungen (16b, 18b, 20b, 22b, 24b) in der Vielzahl von Gasübertragungsleitungen (16, 18, 20, 22, 24) in Kommunikation mit dem Bereitstellungsrohr (28) durch geöffnete Steuerventile (16a, 18a, 20a, 22a, 24a) repräsentativ sind, umfasst, wobei die Durchflusssteuervorrichtung (36) Mittel zum Verarbeiten von Daten, welche den Druck von Gas stromaufwärts der Vielzahl von Gasübertragungsleitungen repräsentieren, und Daten, welche für die Größe von Öffnungen in der Vielzahl von Gasübertragungsleitungen in Kommunikation mit dem Bereitstellungsrohr (28) durch geöffnete Steuerventile (16a, 18a, 20a, 22a, 24a) repräsentativ sind, zum Bestimmen eines Massedurchflusses von Gas in den Aufnahmebehälter (14) umfasst.

10. Gasabfüllsystem nach Anspruch 1, umfassend die zweite Drucküberwachungsvorrichtung (36) stromaufwärts der Vielzahl von Gasübertragungsleitungen (16, 18, 20, 22, 24) zum Messen des Drucks von Gas stromaufwärts der Vielzahl von Gasübertragungsleitungen und zum Durchleiten von Daten, welche für den Druck von Gas stromaufwärts der Vielzahl von Gasübertragungsleitungen repräsentativ sind, zu der Durchflusssteuervorrichtung (36); wobei die Durchflusssteuervorrichtung ein Verhältnis des Drucks von Gas, gemessen stromaufwärts der Vielzahl von Gasübertragungsleitungen (16, 18, 20, 22, 24), zu dem Druck von Gas, gemessen stromaufwärts der Vielzahl von Gasübertragungsleitungen, bestimmt und den Massedurchfluss von Gas in den Aufnahmebehälter (14) bezogen auf das Verhältnis bestimmt.

11. Verfahren zum Füllen eines Aufnahmebehälters (14) aus einer Quelle (12) von komprimiertem Gas unter Verwendung eines Systems (10), umfassend ein Aufnahmerohr (26), welches mit der Quelle (12) von komprimiertem Gas und mit einer Vielzahl von Gasübertragungsleitungen (16, 18, 20, 22, 24) parallel miteinander in Kommunikation steht; ein Bereitstellungsrohr (28) stromaufwärts der Vielzahl von Übertragungsleitungen, welches mit dem Aufnahmebehälter (14) in Kommunikation steht, ein Steuerventil (16a, 18a, 20a, 22a, 24a) in jeder der Vielzahl von Gasübertragungsleitungen stromaufwärts des Bereitstellungsrohrs (28) zum In-Kommunikation-Bringen von jeder der Vielzahl von Gasübertragungsleitungen mit dem Bereitstellungsrohr, wenn in einem geöffneten Zustand; wobei mindestens einige der Vielzahl von Gasübertragungsleitungen (16, 18, 20, 22, 24) unterschiedliche Öffnungskoeffizienten zum Durchlassen von Gas bei unterschiedlichen Durchflussraten durch sie hindurch aufweisen, und eine Durchflusssteuervorrichtung (32) zum Öffnen und Schließen von ausgewählten Steuerventilen (16a, 18a, 20a, 22a, 24a) zum Steuern der Durchflussrate von Gas zu dem Aufnahmebehälter (14), wobei die Durchflusssteuervorrichtung (32) eine gewünschte Anstiegs- bzw. Abfallrate in Kommunikation damit aufweist, wobei das Verfahren die Schritte:
- Messen eines Drucks von Gas, welches in den Aufnahmebehälter (14) gelenkt wird, in aufeinanderfolgenden ausgewählten Zeitintervallen, um eine tatsächliche Anstiegs- bzw. Abfallrate von Gas, welches in den Aufnahmebehälter (14) gelenkt wird, zu bestimmen;
- Vergleichen der tatsächlichen Anstiegs- bzw. Abfallrate mit der gewünschten Anstiegs- bzw. Abfallrate und
- Steuern der Durchflussrate von Gas durch die Vielzahl von Gasübertragungsleitungen (16, 18, 20, 22, 24) in Antwort auf den Vergleich einschließt.

12. Verfahren nach Anspruch 11, umfassend einen Schritt
- Überwachen des Drucks von Gas stromaufwärts der Steuerventile (16a, 18a, 20a, 22a, 24a),
- Bestimmen der Größe von Öffnungen (16b, 18b, 20b, 22b, 24b) in der Vielzahl von Gasübertragungsleitungen in Kommunikation mit dem Aufnahmerohr (26) durch geöffnete Steuerventile (16a, 18a, 20a, 22a, 24a) und
- Berechnen eines Massedurchflusses von Gas in den Aufnahmebehälter (14) bezogen auf den Druck von Gas stromaufwärts der Steuerventile und die Größe von Öffnungen in der Vielzahl von Gasübertragungsleitungen (16, 18, 20, 22, 24) in Kommunikation mit dem Aufnahmerohr (26) durch geöffnete Steuerventile (16a, 18a, 20a, 22a, 24a).

13. Verfahren nach Anspruch 11, umfassend den Schritt
- Überwachen des Drucks von Gas stromaufwärts der Steuerventile (16a, 18a, 20a, 22a, 24a),
- von Bestimmen eines Verhältnisses des Drucks von Gas, welches in den Aufnahmebehälter (14) gelenkt wird, zu dem Druck von Gas stromaufwärts der Steuerventile
- bezogen auf das Verhältnis Berechnen des Massedurchflusses von Gas in den Aufnahmebehälter (14).

14. Verfahren nach Anspruch 11, umfassend die Schritte
- Messen eines Drucks von Gas, welches in den Aufnahmebehälter (14) gelenkt wird, in aufeinanderfolgenden ausgewählten Zeitintervallen, um eine tatsächliche Anstiegs- bzw. Abfallrate von Gas, welches in den Aufnahmebehälter (14) gelenkt wird, zu bestimmen;
- Vergleichen der tatsächlich Anstiegs- bzw. Abfallrate mit einer gewünschten Anstiegs- bzw. Abfallrate und
- Steuern einer Durchflussrate von Gas, welches in den Aufnahmebehälter (14) gelenkt wird, in Antwort auf den Vergleich.

15. Verfahren nach Anspruch 14, wobei der Schritt des Steuerns der Durchflussrate von Gas durch Erhöhen der Durchflussrate von Gas durchgeführt wird, wenn die tatsächliche Anstiegs- bzw. Abfallrate niedriger als die gewünschte Anstiegs- bzw. Abfallrate ist, und durch Erniedrigen der Durchflussrate von Gas durchgeführt wird, wenn die tatsächliche Anstiegs- bzw. Abfallrate höher als die gewünschte Anstiegs- bzw. Abfallrate ist.

16. Verfahren nach Anspruch 14, umfassend Schritte
- Messen eines Druckes von Gas zwischen der Quelle (12) von komprimiertem Gas und einer Vielzahl von Gasübertragungsleitungen (16, 18, 20, 22, 24) parallel miteinander und umfassend Steuerventile (16a, 18a, 20a, 22a, 24a) darin, wobei die Steuerventile zwischen geöffneten und geschlossenen Zuständen bedienbar sind, wobei die Vielzahl von Gasübertragungsleitungen mit geöffneten Ventilen darin die Quelle von komprimiertem Gas mit einem Bereitstellungsrohr (28) in Kommunikation mit dem Aufnahmebehälter (14) stromaufwärts der Vielzahl von Gasübertragungsleitungen (16, 18, 20, 22, 24) in Kommunikation bringt,
- Bestimmen der Größe von Öffnungen (16b, 18b, 20b, 22b, 24b) in der Vielzahl von Gasübertragungsleitungen in Kommunikation mit dem Bereitstellungsrohr (28) durch geöffnete Steuerventile und
- Berechnen eines Massedurchflusses von Gas in den Aufnahmebehälter (14), bezogen auf den Druck von Gas stromaufwärts der Steuerventile und die Größe von Öffnungen in der Vielzahl von Gasübertragungsleitungen in Kommunikation mit dem Bereitstellungsrohr durch geöffnete Steuerventile (16a, 18a, 20a, 22a, 24a).

17. Verfahren nach Anspruch 14, umfassend die Schritte
- Messen des Drucks von Gas zwischen der Quelle (12) von komprimiertem Gas und der Vielzahl von Gasübertragungsleitungen (16, 18, 20, 22, 24) parallel miteinander und umfassend Steuerventile (16a, 18a, 20a, 22a, 24a) darin, wobei die Steuerventile zwischen geöffneten und geschlossenen Zuständen bedienbar sind, wobei die Vielzahl von Gasübertragungsleitungen (16, 18, 20, 22, 24) mit geöffneten Ventilen darin die Quelle von komprimiertem Gas mit dem Bereitstellungsrohr (28) in Kommunikation mit dem Aufnahmebehälter (14) stromaufwärts der Vielzahl von Gasübertragungsleitungen (16, 18, 20, 22, 24) in Kommunikation bringt,
- Bestimmen eines Verhältnisses des Drucks von Gas, welches in den Aufnahmebehälter (14) gelenkt wird, zu dem Druck von Gas zwischen der Quelle (12) von komprimiertem Gas und der Vielzahl von Gasübertragungsleitungen (16, 18,20,22,24)
- bezogen auf das Verhältnis Berechnen des Massedurchflusses von Gas in den Aufnahmebehälter (14).

## Revendications

1. Système de remplissage de gaz (10) destiné à fournir un gaz à une cuve de réception (14), ledit système de remplissage de gaz comprenant :
a. une source de gaz comprimé (12) ;
b. une conduite de réception (26) mettant en communication la source de gaz comprimé (12) avec une pluralité de gazoducs (16, 18, 20, 22, 24) en parallèle les uns avec les autres ;
c. une conduite de refoulement (28) communiquant avec la cuve de réception (14) et avec ladite pluralité de gazoducs (16, 18, 20, 22, 24) ;
d. une soupape de commande (16a, 18a, 20a, 22a, 24a) dans chacun de la pluralité de gazoducs (16, 18, 20, 22, 24) en amont de ladite conduite de refoulement (28) pour mettre en communication chacun de la pluralité de gazoducs avec ladite conduite de refoulement lorsqu'elle est ouverte ; au moins certains de la pluralité de gazoducs ayant des coefficients d'orifice différents pour transmettre un gaz au travers à des débits différents ;
e. un régulateur de débit (32) pour ouvrir et fermer des soupapes de commande (16a, 18a, 20a, 22a, 24a) sélectionnées pour réguler le débit de gaz vers ladite cuve de réception (14) et présentant un débit de rampe souhaité avec lequel elle communique ;
f. un avertisseur de pression (30) en aval de la soupape de commande pour mesurer une pression de gaz dirigé dans la cuve de réception (14) dans des intervalles de temps sélectionnés pour déterminer un débit de rampe réel de gaz dirigé dans la cuve de réception (14) et transmettre en continu ladite pression de gaz vers ledit régulateur de débit (32), ledit régulateur de débit comparant le débit de rampe souhaité avec lequel il communique au débit de rampe réel et régulant le débit de gaz à travers la pluralité de gazoducs vers ladite cuve de réception (14) pour atteindre le débit de rampe souhaité.

2. Système de remplissage de gaz selon la revendication 1, dans lequel le régulateur de débit (32) est un automate programmable (32) dans lequel est programmé le débit de rampe souhaité.

3. Système de remplissage de gaz selon la revendication 1, dans lequel ledit débit de rampe souhaité est transmis au régulateur de débit (32) à partir d'une autre source.

4. Système de remplissage de gaz selon la revendication 1, dans lequel ledit avertisseur de pression (30) mesure la pression de gaz dans ladite conduite de refoulement (28) dans des intervalles de temps sélectionnés.

5. Système de remplissage de gaz selon la revendication 1, dans lequel chacun de la pluralité de gazoducs (16, 18, 20, 22, 24) a un coefficient d'orifice différent du coefficient d'orifice dans chaque autre gazoduc.

6. Système de remplissage de gaz selon la revendication 5, dans lequel le coefficient d'orifice dans chacun de la pluralité de gazoducs (16, 18, 20, 22, 24) augmente successivement d'un facteur d'approximativement 2.

7. Système de remplissage de gaz selon la revendication 1, dans lequel ledit avertisseur de pression (30) mesure une augmentation de pression dans des intervalles de temps sélectionnés successifs, ce qui constitue le débit de rampe réel de gaz dirigé dans ladite cuve de réception (14), ledit régulateur de débit (32) comparant le débit de rampe actuel avec le débit de rampe souhaité et régulant le débit de gaz à travers la pluralité de gazoducs (16, 18, 20, 22, 24) vers ladite cuve de réception (14) à partir de la différence entre le débit de rampe réel et le débit de rampe souhaité.

8. Système de remplissage de gaz selon la revendication 7, dans lequel ledit régulateur de débit (32) augmente le débit de gaz à travers la pluralité de gazoducs (16, 18, 20, 22, 24) vers ladite cuve de réception (14) lorsque le débit de rampe réel est inférieur au débit de rampe souhaité et diminue le débit de gaz à travers la pluralité de gazoducs vers ladite cuve de réception lorsque le débit de rampe réel est supérieur au débit de rampe souhaité.

9. Système de remplissage de gaz selon la revendication 1, comprenant un second avertisseur de pression (36) en amont de ladite pluralité de gazoducs (16, 18, 20, 22, 24) pour mesurer la pression de gaz en amont de ladite pluralité de gazoducs et transmettre des données représentatives de ladite pression de gaz en amont de ladite pluralité de gazoducs vers ledit régulateur de débit (36) ; ledit régulateur de débit comprenant des données représentatives d'une taille d'orifices (16b, 18b, 20b, 22b ; 24b) dans la pluralité de gazoducs (16, 18, 20, 22, 24) communiquant avec ladite conduite de refoulement (28) à travers des soupapes de commande (16a, 18a, 20a, 22a, 24a) ouvertes, ledit régulateur de débit (36) comprenant des moyens pour traiter des données représentant ladite pression de gaz en amont de ladite pluralité de gazoducs et des données représentatives de la taille d'orifices dans la pluralité de gazoducs communiquant avec ladite conduite de refoulement (28) à travers des soupapes de commande (16a, 18a, 20a, 22a, 24a) ouvertes pour déterminer un débit massique de gaz dans ladite cuve de réception (14).

10. Système de remplissage de gaz selon la revendication 1, comprenant le second avertisseur de pression (36) en amont de ladite pluralité de gazoducs (16, 18, 20, 22, 24) pour mesurer la pression de gaz en amont de ladite pluralité de gazoducs et transmettre des données représentatives de ladite pression de gaz en amont de ladite pluralité de gazoducs vers ledit régulateur de débit (36) ; ledit régulateur de débit déterminant un rapport entre la pression de gaz mesurée en aval de ladite pluralité de gazoducs (16, 18, 20, 22, 24) et la pression de gaz mesurée en amont de ladite pluralité de gazoducs et déterminant le débit massique de gaz dans ladite cuve de réception (14) à partir dudit rapport.

11. Procédé de remplissage d'une cuve de réception (14) à partir d'une source (12) de gaz comprimé employant un système (10) comprenant une conduite de réception (26) communiquant avec ladite source (12) de gaz comprimé et avec une pluralité de gazoducs (16, 18, 20, 22, 24) en parallèle les uns avec les autres ; une conduite de refoulement (28) en aval de ladite pluralité de gazoducs communiquant avec ladite cuve de réception (14), une soupape de commande (16a, 18a, 20a, 22a, 24a) dans chacun de la pluralité de gazoducs en amont de ladite conduite de refoulement (28) pour faire communiquer chacun de la pluralité de gazoducs avec ladite conduite de refoulement lorsqu'elle est ouverte ; au moins certains de la pluralité de gazoducs (16, 18, 20, 22, 24) présentant des coefficients d'orifice différents pour transmettre un gaz à des débits différents au travers et un régulateur de débit (32) pour ouvrir et fermer des soupapes de commande (16a, 18a, 20a, 22a, 24a) sélectionnées pour réguler le débit de gaz vers ladite cuve de réception (14), ledit régulateur de débit (32) présentant un débit de rampe avec lequel il communique, ledit procédé comprenant les étapes consistant à mesurer une pression de gaz dirigé dans la cuve de réception (14) dans des intervalles de temps sélectionnés successifs pour déterminer un débit de rampe réel de gaz dirigé dans la cuve de réception (14) ; comparer le débit de rampe réel avec le débit de rampe souhaité et réguler le débit de gaz à travers ladite pluralité de gazoducs (16, 18, 20, 22, 24) en réponse à ladite comparaison.

12. Procédé selon la revendication 11, comprenant les étapes consistant à surveiller la pression de gaz en amont desdites soupapes de commande (16a, 18a, 20a, 22a, 24a), déterminer la taille d'orifices (16b, 18b, 20b, 22b, 24b) dans la pluralité de gazoducs communiquant avec ladite conduite de réception (26) à travers des soupapes de commande (16a, 18a, 20a, 22a, 24a) ouvertes et calculer un débit massique de gaz dans ladite cuve de réception (14) à partir de ladite pression de gaz en amont desdites soupapes de commande et la taille d'orifices dans la pluralité de gazoducs (16, 18, 20, 22, 24) communiquant avec ladite conduite de réception (26) à travers des soupapes de commande (16a, 18a, 20a, 22a, 24a) ouvertes.

13. Procédé selon la revendication 11, comprenant les étapes consistant à surveiller la pression de gaz en amont desdites soupapes de commande (16a, 18a, 20a, 22a, 24a), déterminer un rapport entre la pression de gaz dirigé dans la cuve de réception (14) et la pression de gaz en amont desdites soupapes de commande et, à partir dudit rapport, calculer le débit massique de gaz dans ladite cuve de réception (14).

14. Procédé selon la revendication 11, comprenant les étapes consistant à mesurer la pression de gaz dirigé dans la cuve de réception (14) dans des intervalles de temps sélectionnés successifs pour déterminer un débit de rampe réel de gaz dirigé dans la cuve de réception (14) ; comparer le débit de rampe réel à un débit de rampe souhaité et réguler le débit de gaz dirigé dans ladite cuve de réception (14) en réponse à ladite comparaison.

15. Procédé selon la revendication 14, dans lequel l'étape consistant à réguler le débit de gaz est réalisée en augmentant le débit de gaz lorsque le débit de rampe réel est inférieur au débit de rampe souhaité et en diminuant le débit de gaz lorsque le débit de rampe réel est supérieur au débit de rampe souhaité.

16. Procédé selon la revendication 14, comprenant les étapes consistant à mesurer une pression de gaz entre ladite source (12) de gaz comprimé et une pluralité de gazoducs (16, 18, 20, 22, 24) en parallèle les uns avec les autres et comprenant les soupapes de commande (16a, 18a, 20a, 22a, 24a) à l'intérieur, lesdites soupapes de commande étant opérationnelles entre des conditions ouverte et fermée, la pluralité de gazoducs avec des soupapes ouvertes à l'intérieur mettant en communication ladite source de gaz comprimé avec ladite conduite de refoulement (28) communiquant avec ladite cuve de réception (14) en aval de ladite pluralité de gazoducs (16, 18, 20, 22, 24), déterminer la taille d'orifices (16b, 18b, 20b, 22b, 24b) dans la pluralité de gazoducs communiquant avec ladite conduite de refoulement (28) à travers des soupapes de commande ouvertes et calculer un débit massique de gaz dans ladite cuve de réception (14) à partir de ladite pression de gaz en amont desdites soupapes de commande et de la taille d'orifices dans la pluralité de gazoducs communiquant avec ladite conduite de refoulement à travers les soupapes de commande (16a, 18a, 20a, 22a, 24a) ouvertes.

17. Procédé selon la revendication 14, comprenant les étapes consistant à mesurer la pression de gaz entre ladite source (12) de gaz comprimé et la pluralité de gazoducs (16, 18, 20, 22, 24) en parallèle les uns avec les autres et comprenant les soupapes de commande (16a, 18a, 20a, 22a, 24a) à l'intérieur, lesdites soupapes de commande étant opérationnelles entre des conditions ouverte et fermée, la pluralité de gazoducs (16, 18, 20, 22, 24) avec des soupapes ouvertes à l'intérieur mettant en communication ladite source de gaz comprimé avec la conduite de refoulement (28) communiquant avec ladite cuve de réception (14) en aval de ladite pluralité de gazoducs (16, 18, 20, 22, 24), déterminer un rapport entre la pression de gaz dirigé dans la cuve de réception (14) et la pression de gaz entre ladite source (12) de gaz comprimé et ladite pluralité de gazoducs (16, 18, 20, 22, 24) et, à partir dudit rapport, calculer le débit massique de gaz dans ladite cuve de réception (14).
